# EUROPÄISCHE PATENTSCHRIFT

(11) **EP 0 958 997 B1**
(45) Veröffentlichungstag und Bekanntmachung des Hinweises auf die Patenterteilung: **08.08.2001**
(21) Anmeldenummer: 98101455.8
(22) Anmeldetag: 28.01.1998
(51) Int. Cl.: B62D 61/00

(54) **Fahrbares Gerät**
Mobile device
Appareil mobile

(43) Veröffentlichungstag der Anmeldung: 24.11.1999
(73) Patentinhaber: Hueber, Franz, 90459 Nürnberg (DE)
(72) Erfinder: Hueber, Franz, 90459 Nürnberg (DE)
(74) Vertreter: LOUIS, PÖHLAU, LOHRENTZ & SEGETH

(56) Entgegenhaltungen:
- WO-A-89/06117
- DE-A- 3 626 322
- PATENT ABSTRACTS OF JAPAN vol. 10, no. 249 (M-511) [2305], 27. August 1986 (1986-08-27) & JP 61 077576 A (TOYODA AUTOM LOOM WORKS LTD), 21. April 1986 (1986-04-21)

## Beschreibung

Die Erfindung betrifft ein fahrbares Gerät mit mindestens einem Rad, das um eine Radachse drehbar ist, mit einem an der Radachse pendelnd gelagerten Grundkörper, dessen Schwerpunkt sich unter der Radachse befindet, mit einem Schwingbewegungen des Grundkörpers um die Radachse ausgleichenden Kompensationsgewicht, das mittels eines Reglers definiert aus der normalen Ruheposition, in welcher sich der Gesamtschwerpunkt von Grundkörper und Kompensationsgewicht lotrecht zur Radachse befindet, herausbewegbar ist, und mit einer am Grundkörper vorgesehenen Antriebseinrichtung zum Antrieb des mindestens einen Rades des fahrbaren Gerätes.

Ein solches fahrbares Gerät, nach dem Oberbegriff des Anspruchs 1, ist aus der DE-C-31 03 961 bekannt. Bei diesem bekannten fahrbaren Gerät ist das Schwingbewegungen des Grundkörpers um die Radachse ausgleichende Kompensationsgewicht bspw. von einer Batteriepackung gebildet. Die definierte Verschiebung der Batteriepackung erfolgt mittels eines einfachen Pendelmechanismuses als Regler, der an der Mittelachse des fahrbaren Gerätes angebracht ist und einen Elektromotor sowie eine Gewindestange derartig reguliert, daß sich die Batteriepackung - wie der Support einer Drehbank - hin- und herbewegt, wie in Spalte 3, Zeilen 20 ff. beschrieben ist.

Wie dieser Pendelmechanismus funktioniert, dazu macht diese Druckschrift keine detaillierteren Angaben.

Der Erfindung liegt die Aufgabe zugrunde, ein fahrbares Gerät der eingangs genannten Art zu schaffen, bei welchem die Regelung des Schwingbewegungen des Geräte-Grundkörpers um die Radachse ausgleichenden Kompensationsgewichtes simultan mit dem Antrieb des mindestens einen Rades des fahrbaren Gerätes automatisch und selbständig erfolgt, wobei zum Wippen des Grundkörpers führende Drehmomente unverzüglich ausgeglichen werden.

Diese Aufgabe wird bei einem fahrbaren Gerät der eingangs genannten Art erfindungsgemäß dadurch gelöst, daß die Radachse des mindestens einen Rades ein Differential aufweist, das mit der Antriebseinrichtung wirkverbunden ist und das zwischen dem mindestens einen Rad und einem zugehörigen Ritzel angeordnet ist, das mit dem zugehörigen Regler und mit dem zugehörigen Kompensationsgewicht bzw. mit dem vom jeweiligen Regler gebildeten Kompensationsgewicht wirkverbunden ist.

Bei dem solchermaßen ausgebildeten erfindungsgemäßen fahrbaren Gerät sind also in vorteilhafter Weise keine elektronischen oder andere zusätzliche Einrichtungen erforderlich, um ein unerwünschtes Drehmoment, das zum Wippen des Grundkörpers um die Radachse des fahrbaren Gerätes führen würde, prompt auszugleichen. Bei dem erfindungsgemäßen Gerät wirkt der Regler genauso lange gegen ein solches unerwünschtes Drehmoment bzw. einen unerwünschten Drehimpuls, wie es zum Erhalt des dynamischen Gleichgewichts erforderlich ist.

Das mindestens eine Kompensationsgewicht des erfindungsgemäßen fahrbaren Gerätes kann in an sich bekannter Weise mit einer Servohydraulik oder mit einer Servopneumatik ausgestattet sein, welche während der Dauer des entsprechenden Drehimpulses die exakte Verstellung des entsprechenden Kompensationsgewichtes in die erforderliche Richtung sicherstellt. Die Ausbildung mit der besagten Servohydraulik oder Servopneumatik ergibt den weiteren Vorteil, daß Reibungswiderstände im entsprechenden Regelungsabschnitt eliminierbar sind.

Bei dem erfindungsgemäßen fahrbaren Gerät kann das jeweilige Differential mit der Antriebseinrichtung mittels einer Antriebswelle, eines an der Antriebswelle fixierten Antriebsrades, und eines am Differential-Gehäuse fixierten und mit dem Antriebsrad kämmenden Abtriebsrades wirkverbunden sein. Bei dem besagten Antriebsrad kann es sich bspw. um ein Antriebskegelrad und bei dem Abtriebsrad um ein Tellerrad handeln, wie sie von herkömmlichen Differentialen bekannt sind. Das Abtriebsrad ist mit einer Bremsscheibe verbunden.

Zweckmäßig ist es bei dem erfindungsgemäßen fahrbaren Gerät, wenn der Regler ein am Grundkörper festgelegtes Grundteil und ein am Grundteil linear beweglich vorgesehenes Verschiebeteil aufweist, das eine mit dem Ritzel kämmende Zahnstange besitzt, wobei zwischen dem Grundteil und dem Verschiebeteil eine Federeinrichtung vorgesehen ist. Diese Federeinrichtung weist vorzugsweise zwei gleiche Federelemente auf, von welchen das eine Federelement bei einer Verschiebung des Verschiebeteils auf Zug und das andere Federelement auf Druck, und umgekehrt, beansprucht werden. Die beiden Federelemente müssen zwischen dem Verschiebeteil und dem Grundteil nicht fest eingespannt sein. In diesem Falle wird bei jeder Verstellung des Verschiebeteiles nur ein Federelement entsprechend beansprucht.

Es ergibt sich ein drehimpulsgesteuertes Regelungssystem mit einer Impulsabnahme über das mindestens eine Differential, das über die Radachse und das zugehörige Ritzel und über die beiden Federelemente zwischen dem fahrzeugfesten Grundkörper und dem daran vorgesehenen Verschiebeteil den jeweiligen Drehimpuls abgibt und unmittelbar in eine entsprechende Verschiebung des zugehörigen Kompensationsgewichtes umsetzt. Hierdurch wird das fahrbare Gerät bzw. sein an der Radachse pendelnd gelagerter Grundkörper an einer Schwingbewegung um die Radachse gehindert.

Die besagten Federelemente der Federeinrichtung können bspw. von Schraubenfedern oder von anderen entsprechend wirkenden Elementen wie Gasfedern o.dgl. gebildet sein.

Eine kompakte Ausbildung des erfindungsgemäßen fahrbaren Gerätes ergibt sich, wenn das Verschiebeteil des Reglers mit dem Kompensationsgewicht versehen ist und somit unmittelbar das Kompensationsgewicht bildet. In diesem Falle ist durch entsprechende Übersetzung die für das Gleichgewicht erforderliche Bewegungsrichtung des Reglers herzustellen.

Bei dem erfindungsgemäßen fahrbaren Gerät kann es sich um ein einrädriges einachsiges, um ein zweirädriges einachsiges oder um ein mehrachsiges Fahrzeug handeln. Bei einem mehrachsigen Fahrzeug können die Räder einer Fahrzeuzgseite als ein ideelles Rad angesehen werden. Dieses ideelle Rad ist durch den Kreis bestimmt, welcher die endseitigen Räder der jeweiligen Fahrzeug-Seite tangiert, d.h. berührend umschließt. Die Achse dieses ideellen Rades ist bei einem solchen Fahrzeug die erwähnte Radachse hinsichtlich des Gesamtschwerpunkts.

Im Falle des einachsig zweirädrigen Fahrzeuges kann an den beiden voneinander entfernten Endabschnitten der Radachse jeweils ein Rad vorgesehen sein, wobei jedem der beiden Räder ein Differential und ein Regler sowie ein gemeinsames Kompensationsgewicht zugeordnet sind, und wobei an der Radachse ein Zentraldifferential vorgesehen sein kann, das mit dem Kompensationsgewicht wirkverbunden ist. Bei einer solchen Ausbildung des fahrbaren Gerätes kann am Differentialgehäuse des Zentraldifferentiales ein Zentralantriebsrad fixiert sein, das mit einem zentralen Abtriebsrad kämmt, und kann das entlang einer Linearführungseinrichtung bewegbare Kompensationsgewicht eine Zahnstange aufweisen, die mit dem zentralen Abtriebsrad kämmt.

Bei der oben beschriebenen Ausbildung des fahrbaren Gerätes wird das Kompensationsgewicht also geregelt linear verstellt, um Schwingbewegungen des Grundkörpers des fahrbaren Gerätes um die Radachse definiert zu vermeiden, d.h. auszugleichen. Es ist jedoch auch möglich, daß das an der Radachse fixierte Ritzel mit einem das Kompensationsgewicht bildenden Pendelgewicht verbunden ist. Bei diesem Pendelgewicht kann es sich bspw. um ein scheibensegmentförmiges Gebilde handeln.

Erfindungsgemäß ergibt sich eine drehimpulsgesteuerte Regelung mit einer Impulsabnahme über ein Differential, wobei das Pendelgewicht den jeweiligen Drehimpuls in eine Dreh- bzw. Schwenkbewegung umsetzt, die das Pendelgewicht verschwenkt und entsprechend anhebt, wodurch der Geräte-Grundkörper bei der Reaktion auf den entsprechenden Drehimpuls entlastet wird, was einen Ausgleich der Schwingbewegung des Grundkörpers um die Radachse bedeutet.

Mit dem erfindungsgemäßen fahrbaren Gerät ergibt sich der Vorteil, daß das Fahrzeug, d.h. sein an der Radachse pendelnd gelagerter Grundkörper an einer Schaukelbewegung gehindert wird. Das gilt sowohl bei fahrbaren Geräten, die auf einer Basis abrollen, oder die an einer Schiene oder an einem Seil schweben. Ein weiterer Vorteil besteht darin, daß bei dem erfindungsgemäßen fahrbaren Gerät Anfahrregler oder Elektromotoren als Antriebseinrichtung nicht erforderlich sind. Daraus resultiert der weitere Vorteil, daß die Gefahr eines Nichtfunktionierens infolge Versagens elektrischer oder elektronischer Teile des fahrbaren Gerätes eliminiert ist, da das Gleichgewicht zwischen dem von der Antriebseinrichtung generierten Drehmoment und dem vom Kompensationsgewicht erzeugten Ausgleichs-Drehmoment durch Motorkraft gehalten wird. Analog hält die Masseträgheit beim Bremsen das Gleichgewicht im erforderlichen Umfang aufrecht.

Da der Regelungsmechanismus das durch Gasgeben (oder Bremsen) ausgelöste Drehmoment - soweit es von dem mindestens einen Rad des fahrbaren Gerätes nicht angenommen wird - in eine geregelte Verschiebung des Kompensationsgewichtes umsetzt - und zwar genauso viel wie das mindestens eine Rad an Drehmomentkraft nicht annimmt - ergibt sich der weitere Vorteil, daß das erfindungsgemäße fahrbare Gerät sich für den normalen Straßenverkehr eignet. Wobei selbst ein gefühlloses Steuern des jeweiligen Fahrzeuges keine Schwierigkeiten bereitet. Das erfindungsgemäße Prinzip stellt auch bei an sich bekannten mehrachsigen Fahrzeugen unter Sicherheitsgesichtspunkten eine vorteilhafte Weiterentwicklung dar.

Bei erfindungsgemäßen Fahrzeugen, die an Seilen oder Schienen hängen, besteht bei Anwendung des erfindungsgemäßen Prinzipes der Vorteil, daß zügiger als bislang angefahren und abgebremst werden kann, weil jederzeit entsprechende Schwingbewegungen des Geräte-Grundkörpers um die Radachse in einfacher Weise zuverlässig kompensiert werden. Daraus resultiert für solche an Seilen oder Schienen hängende Fahrzeuge eine größere, dem Sicherheitsbedürfnis der Passagiere eines solchen Fahrzeuges zumutbare Höchstgeschwindigkeit.

Weitere Einzelheiten, Merkmale und Vorteile ergeben sich aus der nachfolgenden Beschreibung eines in der Zeichnung schematisch dargestellten Ausführungsbeispieles des erfindungsgemäßen fahrbaren Gerätes. Es zeigen:
- Fig. 1: schematisch in einer Draufsicht eine Ausbildung des fahrbaren Gerätes mit einer Radachse mit zwei Rädern,
- Fig. 2: eine Ansicht des Details II in Fig. 1,
- Fig. 3: das Detail II gemäß Fig. 1 in Blickrichtung des Pfeiles III in Fig. 2,
- Fig. 4: eine Ansicht in Blickrichtung der Pfeile IV-IV in Fig. 3 zur Verdeutlichung einer Ausbildung des Reglers des fahrbaren Gerätes gemäß Fig. 1, und
- Fig. 5: in einer der Fig. 4 ähnlichen Ansicht eine andere Ausbildung des Reglers.

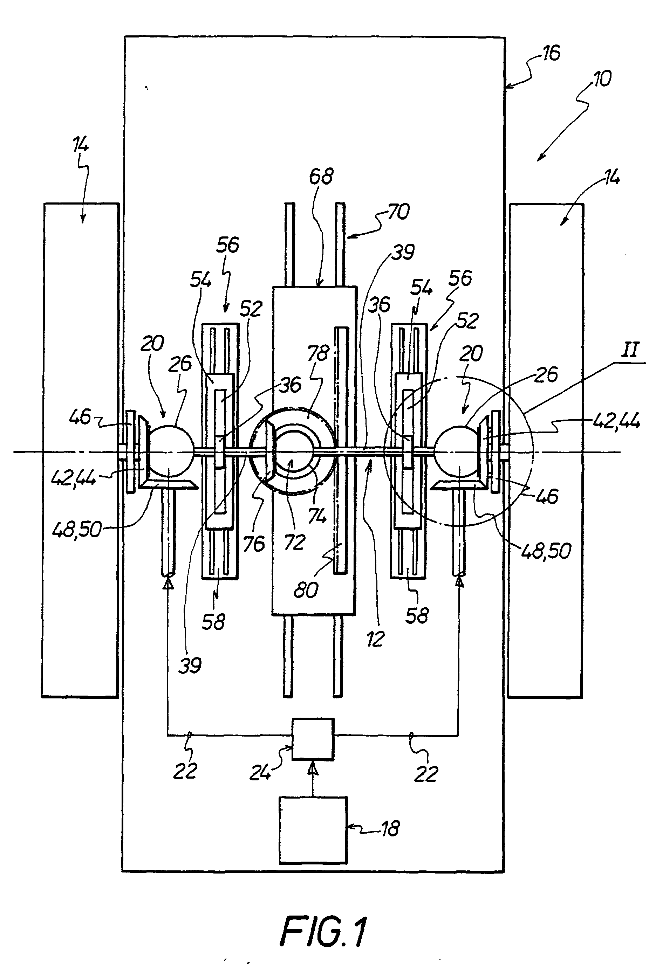

Fig. 1 zeigt schematisch in einer Draufsicht eine Ausbildung des fahrbaren Gerätes 10, das eine Radachse 12 aufweist, an deren voneinander abgewandten Endabschnitten jeweils ein Rad 14 vorgesehen ist. An der Radachse 12 ist ein Geräte-Grundkörper 16 pendelnd gelagert, bei dem es sich z.B. um eine Fahrzeug-Kabine handelt. In der normalen Ruheposition befindet sich der Gesamt-Schwerpunkt des Grundkörpers 16 lotrecht unter der Radachse 12.

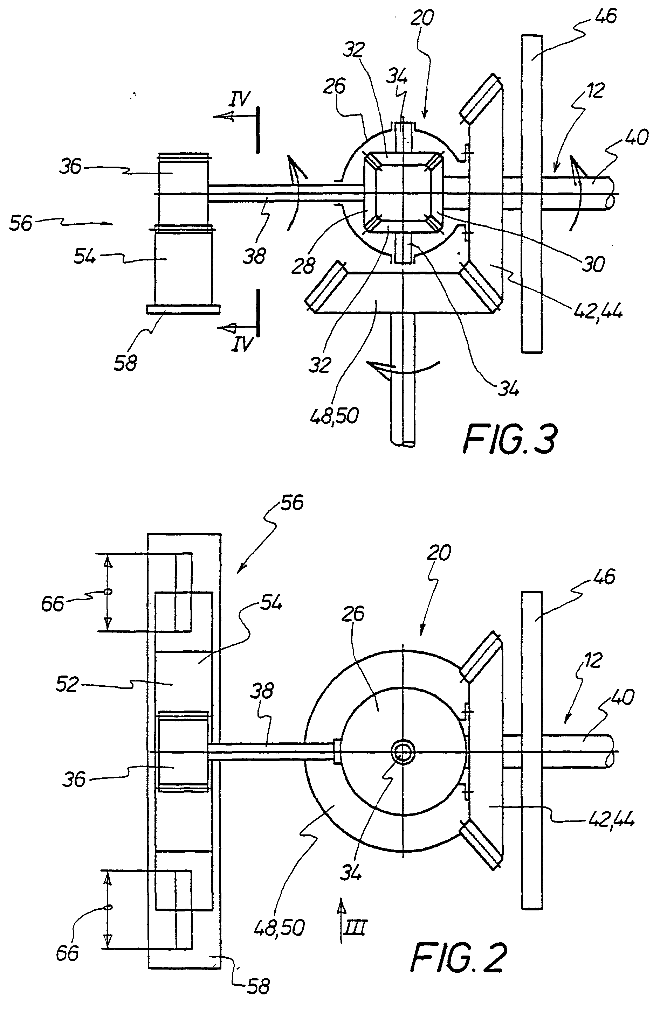

Am Grundkörper 16 ist eine Antriebseinrichtung 18 vorgesehen, bei der es sich bspw. um einen Elektromotor oder um einen Verbrennungsmotor handelt. Jedem der beiden Räder 14 ist ein Differential 20 zugeordnet, das weiter unten in Verbindung mit den Figuren 2 und 3 beschrieben wird. Die beiden Differentiale 20 sind mit der Antriebseinrichtung 18 wirkverbunden, was durch die abgewinkelten Pfeile 22 angedeutet ist.Diese Wirkverbindung ist mit einem zentralen Differentialgetriebe 24 versehen, das wie die Antriebseinrichtung 18 nur durch einen Block schematisch verdeutlicht ist.

Wie insbes. aus Fig. 3 ersichtlich ist, weist das jeweilige Differential 20 ein Differentialgehäuse 26 auf, in welchem Tellerräder 28 und 30 und mit den Tellerrädern 28 und 30 kämmende Ausgleichsräder 32 gelagert sind. Die Ausgleichsräder 32 sind mittels Achsstummeln 34 im Differentialgehäuse 26 drehbar gelagert.

Das Tellerrad 28 ist mit einem Ritzel 36 mittels eines Abschnittes 38 der Radachse 12 verbunden. Das Tellerrad 30 ist mit einem Abschnitt 40 der Radachse 12 verbunden, an welchem das zugehörige Rad 14 angebracht ist.

Mit dem Differentialgehäuse 26 ist ein von einem Tellerrad 42 gebildetes Abtriebsrad 44 fest verbunden. Mit dem das Abtriebsrad 44 bildenden Tellerrad 42 ist ein Bremsscheibe 46 fest verbunden.

Der Abschnitt 40 der Radachse 12 erstreckt sich durch das Tellerrad 42 und durch die Bremsscheibe 46 hindurch. Mit dem Tellerrad 42 kämmt ein Antriebsrad 48, das bekanntermaßen von einem Antriebskegelrad 50 gebildet sein kann.

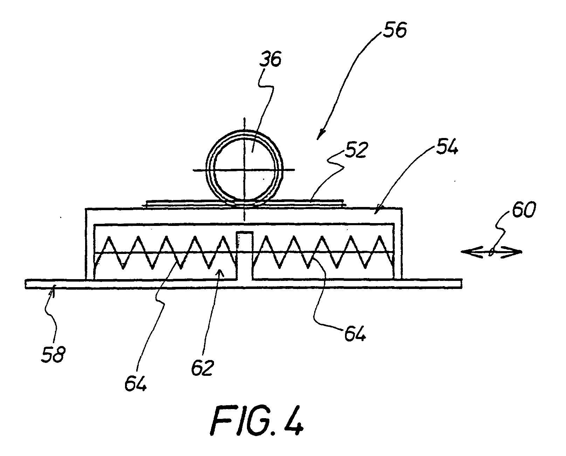

Das Ritzel 36 ist mit einer Zahnstange 52 (sh. insbes. die Fig. 4) kämmend in Eingriff, die an einem Verschiebeteil 54 eines Reglers 56 vorgesehen ist. Das Verschiebeteil 54 ist an einem Grundteil 58 des Reglers 56 linear beweglich angeordnet, was in Fig. 4 durch den Doppelpfeil 60 angedeutet ist. Zwischen dem gerätefesten Grundteil 58 und dem Verschiebeteil 54 ist eine Federeinrichtung 62 vorgesehen, die von zwei Federelementen 64 gebildet ist. Eine Drehung des Ritzels 36 in der einen oder anderen Drehrichtung führt zu einer entsprechenden Verschiebung des Verschiebeteiles 54 und somit zu einer Beanspruchung des einen Federelementes 64 auf Zug und des anderen Federelementes 64 der Federeinrichtung 62 auf Druck, und umgekehrt. Die entsprechende Regelstrecke des Reglers 56 ist in Fig. 2 durch die Pfeile 66 angedeutet.

Fig. 1 verdeutlicht zwei solcher Regler 56 mit ihrem jeweiligen Grundteil 58, ihrem zugehörigen Verschiebeteil 54 mit Zahnstange 52 und dem mit der jeweiligen Zahnstange 52 kämmenden Ritzel 36. Zwischen den beiden zu den Rädern 14 zugehörigen Reglern 56 ist ein gemeinsames Kompensationsgewicht 68 vorgesehen, das entlang einer Linearführungseinrichtung 70 gesteuert linear beweglich ist. An der sich zwischen den beiden Rädern erstreckenden Radachse 12 ist ein Zentraldifferential 72 vorgesehen, das ein Gehäuse 74 und ein mit dem Gehäuse 74 fest verbundenes großes Tellerrad 76 aufweist. Das große Tellerrad 76 kämmt mit einem Kegelrad 78, das mit einer Zahnstange 80 des Kompensationsgewichtes 68 kämmt.

Anstelle des zentralen Kompensationsgewichtes 68 ist es auch möglich, die Verschiebeteile 54 der Regler 56 jeweils mit einem Kompensationsgewicht zu versehen. Auf entsprechende Bewegungsrichtung der Regler 56 ist durch geeignete Übersetzung zu achten.

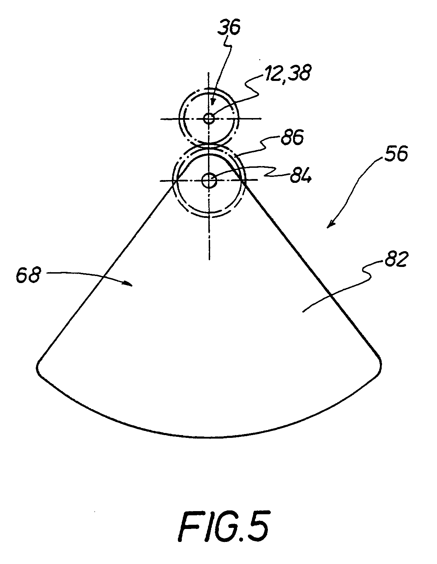

Während die Figuren 1 bis 4 einen linearen Regler 56 verdeutlichen, verdeutlicht die Fig. 5 einen Regler 56 mit einem das Kompensationsgewicht 68 bildenden Pendelgewicht 82, von welchem eine Achse 84 wegsteht, an der ein Abtriebsritzel 86 fixiert ist. Das Abtriebsritzel 86 kämmt mit dem Ritzel 36, das oben in Verbindung mit den Figuren 1 bis 4 beschrieben worden ist.

Nachfolgend wird die Funktionsweise für ein einachsig zweirädriges Fahrzeug beschrieben. Die beschriebene Funktionsweise gilt für ein einachsig einrädriges Fahrzeug bzw. für ein mehrachsiges Fahrzeug mit einer erfindungsgemäß ausgebildeten Antriebsachse entsprechend. Die Ansteuerung des Fahrzeugs funktioniert grundsätzlich so, wie bei Schwebewagen oder bei Kettenfahrzeugen üblich. Gleiches gilt für das Bremsen und Lenken des Fahrzeugs, wobei das Lenken bei einem Straßenfahrzeug bspw. durch einseitiges Bremsen bewirkt wird. Das zentrale Differentialgetriebe 24 (sh. Fig. 1) sorgt hierbei für eine entsprechende Kräfteeinleitung in die Räder 14. Bremsen und Lenken erfolgt also über die Bremsscheiben 46. Wie bereits erwähnt worden ist, sind die Bremsscheiben 46 nicht mit den Rädern 14 sondern mit den Tellerrädern 42 der zu den Rädern 14 zugehörigen Differentiale 20 verbunden.

Beim Starten in Vorwärtsfahrt bekäme der Grundkörper 16 des fahrbaren Gerätes 10 ohne die besagten Differentiale 20 einen Drehimpuls, welcher den vorderseitigen Teil des Grundkörpers nach oben drücken würde, da das entsprechende Rad 14 infolge der Masseträgheit den eingeleiteten Drehimpuls nur allmählich in Drehbewegung und damit in Vorwärtsbewegung des fahrbaren Gerätes 10 umsetzt. Das zum jeweiligen Rad 14 zugehörige Differential 20 nimmt jedoch den vom entsprechenden Antriebsrad 48 kommenden Drehimpuls über das mit ihm kämmende Tellerrad 42 an, um den besagten Drehimpuls - so lange und so weit er nicht von dem mit dem entsprechenden Rad 14 verbundenen Tellerrad 30 angenommen wird - vermittels der Ausgleichsräder 32 an das andere Tellerrad 28 abzugeben. Das zuletzt genannte Tellerrad 28 bewegt mittels des Abschnittes 38 der Radachse 12 das zugehörige Ritzel 36 und somit über die mit dem Ritzel 36 kämmende Zahnstange 52 das Verschiebeteil 54 des Reglers 56. Diese Bewegung des Verschiebeteiles 54 erfolgt gegen die Federkraft der Federeinrichtung 62. Dabei geben die Federelemente 64 der Federeinrichtung 62 in Abhängigkeit vom eingeleiteten Drehimpuls nach. Ihre Dehnungs- bzw. Stauchungsstrecke wächst linear mit dem erwähnten, eingeleiteten Drehimpuls. Dementsprechend verschiebt sich das Verschiebeteil 54 des Reglers 56. Simultan wird der Abschnitt 39 der Radachse 12 an einer Drehung über das erforderliche Maß hinaus gehindert, das zur Verschiebung des Kompensationsgewichtes 68 (sh. Fig. 1) notwendig ist.

Gemeinsam mit dem zum anderen Rad 14 zugehörigen Abschnitt 39 der Radachse 12 wird über das Zentraldifferential 72 das Kompensationsgewicht 68 definiert verstellt. Diese Verstellung kann servohydraulisch oder servopneumatisch unterstützt sein. Sie kann bspw. auch über eine Gewindespindel o.dgl. erfolgen. Die Verstellung des Kompensationsgewichtes 68 erfolgt proportional zum Mittelwert der Beanspruchung der beiden Federelemente 64 der beiden zu den Rädern 14 zugehörigen Regler 56.

Das einzige zentrale Kompensationsgewicht 68 kann auch durch zwei Kompensationsgewichte ersetzt sein. In diesem Falle ist auch das Zentraldifferential 72 entbehrlich. Die besagten Kompensationsgewichte 68 können am Verschiebeteil 54 des jeweiligen Reglers 56 vorgesehen sein, bei entsprechend der notwendigen Richtung eingebautem Übersetzungsrad o.dgl. Das ist insbes. dann möglich, wenn der Reibungswiderstand des jeweiligen Reglers 56 durch geeignete Lagerung vernachlässigbar klein ist, die Federelemente 64 zwischen dem Grundteil 58 und dem Verschiebeteil 54 des jeweiligen Reglers 56 und damit die jeweilige Regelstrecke 66 (sh. Fig. 2) entsprechend optimal proportioniert sind und das Kompensationsgewicht 68 des jeweiligen Reglers 56 eine geeignete Größe besitzt. Bei einer solchen Ausbildung können also die Regler 56 bzw. ihre Verschiebeteile 54 selbst das jeweilige Kompensationsgewicht 68 bilden.

Das beim Anfahren des fahrbaren Gerätes 10 nach vorne verstellte Kompensationsgewicht 68 verhindert somit ein unerwünschtes Anheben des Vorderteils des Gerätes 10. Das Kompensationsgewicht 68 leistet also gegen ein unerwünschtes Anheben des Vorderteils des Gerätes 10 durch den entsprechenden Masseträgheits-Drehimpuls genau so viel Widerstand, wie die Federelemente 64 Widerstand gegen den Verschiebung auslösenden Impuls leisten.

Entscheidend für den besagten Widerstand gegen den Drehimpuls ist nicht die Verstellung des Kompensationsgewichtes 68 sondern die SchwerpunktVerschiebung des gesamten fahrbaren Gerätes 10. Diese Schwerpunktverschiebung erfolgt proportional zur Verschiebung des Kompensationsgewichtes 68. Nimmt also der Drehimpuls zu, so geben die Federelemente 64 entsprechend nach. In gleicher Weise nimmt der Widerstand gegen den Drehimpuls zu - und zwar sowohl an dem mit dem jeweiligen Regler 56 wirkverbundenen Tellerrad 28 als auch am Antriebsrad 48 des jeweiligen Differentials 20. Mit zunehmendem Drehimpuls baut sich also so lange ein entsprechender mechanischer Widerstand auf, bis das mit dem entsprechenden Rad 14 verbundene Tellerrad 30 und somit das entsprechende Rad 14 selbst den Drehimpuls annimmt und in eine Bewegung des fahrbaren Gerätes 10 umsetzt. Nachdem nun das am anderen Tellerrad 28 wirkende Drehmoment abnimmt, zwingen die Federelemente 64 der Federeinrichtung 62 des jeweiligen Reglers 56 durch Bewegung in den Ausgangszustand den Regler 56 in die Ausgangsposition. Hierdurch wird das Kompensationsgewicht 68 entsprechend in die Ruhe- bzw. Grundposition bewegt. Auf diese Weise wird verhindert, daß bei abnehmendem Rest-Drehmoment das fahrbare Gerät 10 in unerwünschter Weise mit seinem Vorderteil nach unten kippt.

Das Bergfahren mit konstanter Geschwindigkeit entspricht dem Anfahren oder Beschleunigen in der Ebene mit entsprechender Kraft. Fahren in der Ebene mit konstanter Geschwindigkeit entspricht einem mäßigen Anfahren, da der Luftwiderstand den gleichen Effekt wie die Masseträgheit auf das System hat, d.h. die Wirkungsweise des mindestens einen Reglers 56 ist stets die gleiche. Die horizontale Ausrichtung des Geräte-Grundkörpers 16 wird stets auf die gleiche Weise sichergestellt.

Gebremstes Bergabfahren entspricht dem normalen Bremszustand, ebenso das Parken in Hanglage. Dabei ist es unerheblich, ob mit Bremsbacken oder mit der Antriebseinrichtung 18 gebremst wird, da die Bremsscheibe 46 mit dem zugehörigen Tellerrad 42 fest verbunden ist. Der wesentliche Unterschied zum Anfahren in der Ebene oder zum Bergauffahren besteht jedoch darin, daß der Drehimpuls vom entsprechenden Rad 14 und von dem mit ihm fest verbundenen Tellerrad 30 herrührt.

Das Anbremsen des fahrbaren Gerätes 10 funktioniert wie folgt: Da das Tellerrad 42 und die Bremsscheibe 46 bei einer Betätigung der (nicht gezeichneten) Bremsbacken des fahrbaren Gerätes 10 - wie bei Kettenfahrzeugen - angebremst wird, übertragen die Ausgleichsräder 32 des jeweiligen Differentials 20 den Drehimpuls des Tellerrades 30 auf das andere mit dem Regler 56 verbundene Tellerrad 28, da dieses infolge der Ausgangs- bzw. Ruhestellung der Federelemente 64 den geringsten Widerstand leistet. Das Drehmoment wirkt entsprechend der jeweiligen Brems-Intensität auch auf das fahrbare Gerät 10 bzw. den Geräte-Grundkörper 16. Da jedoch das Drehverhalten der Ausgleichsräder 32 nun bei relativ trägem Differentialgehäuse 26 und Drehimpuls durch das Tellerrad 30 entgegengesetzt zum Drehverhalten bei trägem Tellerrad 30 und vom Gehäuse 26 erzeugtem Drehimpuls ist, wird das Kompensationsgewicht 68 durch das erfindungsgemäße Regelungssystem definiert gesteuert in die entgegengesetzte Richtung verstellt. Hierdurch wird das ansonsten beim Bremsen übliche Neigen des Vorderteils des fahrbaren Gerätes 10 durch den nach hinten verschobenen Schwerpunkt des Gesamtsystems verhindert.

Zweckmäßigerweise kann der Bremsvorgang kurz vor einem Stillstand des fahrbaren Gerätes 10 wiederholt unterbrochen werden, damit das Greifen der nicht gezeichneten Bremsbacken nicht zu einer besonders starken Verstellung des Kompensationsgewichtes 68 führt. Hierdurch kann der Geräte-Grundkörper 16 um die Radachse 12 zwar geringfügig zu schwingen beginnen, die Verschiebung des Kompensationsgewichtes 68 bei einem Stillstand des Gerätes 10 ist jedoch dadurch gering genug, so daß eine Verzögerung des Regelungssystemes nicht zu einer unerwünschten Schräglage des Geräte-Grundkörpers 16 um die Radachse 12 nach hinten führt. Ein kurzfristiges Lösen der Bremseinrichtung nach Erreichen des Stillstandes verbessert die Gleichgewichtslage des Geräte-Grundkörpers 16. Für das Bremsen des fahrbaren Gerätes 10 kann bspw. ein an sich bekanntes sensibles Antiblockiersystem zur Anwendung gelangen.

Bergabfahren im Leerlauf entspricht der Situation des in der Ebene stehenden Gerätes 10. Da der Antrieb 18 und die (nicht gezeichneten) Bremsbacken der Bremsscheiben 46 nicht greifen, hat das vom entsprechenden Rad 14 kommende Drehmoment keine Gelegenheit, einen Drehimpuls auf das Tellerrad 28 des entsprechenden Differentials 20 auszuüben. Es wird also auch auf den entsprechenden Regler 56 kein Drehimpuls übertragen, da sich das Differentialgehäuse 26 mit dem Rad 14 entsprechend mitdreht.

## Patentansprüche

1. Fahrbares Gerät mit mindestens einem Rad (14), das um eine Radachse (12) drehbar ist, mit einem an der Radachse (12) pendelnd gelagerten Grundkörper (16), dessen Schwerpunkt sich unter der Radachse (12) befindet, mit einem Schwingbewegungen des Grundkörpers (16) um die Radachse (12) ausgleichenden Kompensationsgewicht (68), das mittels eines Reglers (56) definiert aus der normalen Ruheposition, in welcher sich der Gesamtschwerpunkt des Gerätes (10) lotrecht unter der Radachse (12) befindet, herausbewegbar ist, und mit einer am Grundkörper (16) vorgesehenen Antriebseinrichtung (18) zum Antrieb des mindestens einen Rades (14) des Gerätes (10),
**dadurch gekennzeichnet,**
daß die Radachse (12) des mindestens einen Rades (14) ein Differential (20) aufweist, das mit der Antriebseinrichtung (18) wirkverbunden ist und das zwischen dem mindestens einen Rad (14) und einem zugehörigen Ritzel (36) angeordnet ist, das mit dem zugehörigen Regler (56) und mit dem zugehörigen Kompensationsgewicht (68) oder mit dem vom jeweiligen Regler (56) gebildeten Kompensationsgewicht (68) wirkverbunden ist.

2. Fahrbares Gerät nach Anspruch 1,
**dadurch gekennzeichnet,**
daß das jeweilige Differential (20) mit der Antriebseinrichtung (18) mittels einer Antriebswelle, eines an der Antriebswelle fixierten Antriebsrades (48), und eines am Differentialgehäuse (26) fixierten und mit dem Antriebsrad (48) kämmenden Abtriebsrades (44) wirkverbunden ist.

3. Fahrbares Gerät nach Anspruch 2,
**dadurch gekennzeichnet,**
daß mit dem Abtriebsrad (44) eine Bremsscheibe (46) verbunden ist.

4. Fahrbares Gerät nach Anspruch 1,
**dadurch gekennzeichnet,**
daß der Regler (56) ein am Grundkörper (16) festgelegtes Grundteil (58) und ein am Grundteil (58) linear beweglich vorgesehenes Verschiebeteil (54) aufweist, das eine mit dem Ritzel (36) kämmende Zahnstange (52) aufweist, wobei zwischen dem Grundteil (58) und dem Verschiebeteil (54) eine Federeinrichtung (62) vorgesehen ist.

5. Fahrbares Gerät nach Anspruch 4,
**dadurch gekennzeichnet,**
daß die Federeinrichtung (62) zwei gleiche Federelemente (64) aufweist, von welchen das eine Federelement (64) bei einer Verschiebung des Verschiebeteils (54) auf Zug und das andere Federelement (64) auf Druck, und umgekehrt, beansprucht werden.

6. Fahrbares Gerät nach Anspruch 4 oder 5,
**dadurch gekennzeichnet**,
daß das Verschiebeteil (54) mit dem Kompensationsgewicht (68) versehen ist.

7. Fahrbares Gerät nach einem der Ansprüche 1 bis 6,
**dadurch gekennzeichnet,**
daß an den beiden voneinander entfernten Endabschnitten der Radachse (12) jeweils ein Rad (14) vorgesehen ist, wobei jedem der beiden Räder (14) ein Differential (20) und ein Regler (56) zugeordnet sind, und an der Radachse (12) ein Zentraldifferential (72) vorgesehen ist, das mit dem Kompensationsgewicht (68) wirkverbunden ist.

8. Fahrbares Gerät nach Anspruch 7,
**dadurch gekennzeichnet,**
daß am Differentialgehäuse des Zentraldifferentials (72) ein Zentralantriebsrad (76) fixiert ist, das mit einem zentralen Abtriebsrad (78) kämmt, und daß das entlang einer Linearführungseinrichtung (70) bewegbare Kompensationsgewicht (68) eine Zahnstange (80) aufweist, die mit dem Zentralabtriebsrad (78) kämmt.

9. Fahrbares Gerät nach Anspruch 1,
**dadurch gekennzeichnet,**
daß das an der Radachse (12) fixierte Ritzel (36) mit einem das Kompensationsgewicht (68) bildenden Pendelgewicht (82) wirkverbunden ist.

## Claims

1. Mobile unit with at least one wheel (14), which is capable of rotation about a wheel axle (12), with a main body (16), which is pendulum-mounted on the wheel axle (12) and the centre of gravity of which is below the wheel axle (12), with a compensation weight (68), which compensates oscillatory movements of the main body (16) about the wheel axle (12) and can be moved in a defined manner by means of a regulator (56) out of the normal position of rest, in which the overall centre of gravity of the unit (10) is perpendicularly below the wheel axle (12), and with a driving device (18), provided on the main body (16), for driving the at least one wheel (14) of the unit (10), characterized in that the wheel axle (12) of the at least one wheel (14) has a differential (20), which is operatively connected to the driving device (18) and is arranged between the at least one wheel (14) and an associated pinion (36), which is operatively connected to the associated regulator (56) and to the associated compensation weight (68) or to the compensation weight (68) formed by the respective regulator (56).

2. Mobile unit according to Claim 1, characterized in that the respective differential (20) is operatively connected to the driving device (18) by means of an input shaft, of an input wheel (48) fixed on the input shaft and of an output wheel (44) that is fixed on the differential case (26) and meshes with the input wheel (48).

3. Mobile unit according to Claim 2, characterized in that a brake disc (46) is connected to the output wheel (44).

4. Mobile unit according to Claim 1, characterized in that the regulator (56) has a main part (58), which is fixed on the main body (16), and a displaceable part (54), which is provided in a linearly movable manner on the main part (58) and has a rack (52) that meshes with the pinion (36), a spring device (62) being provided between the main part (58) and the displaceable part (54).

5. Mobile unit according to Claim 4, characterized in that the spring device (62) has two identical spring elements (64), of which one spring element (64) is subjected to tension and the other spring element (64) is subjected to compression, and vice versa, during displacement of the displaceable part (54).

6. Mobile unit according to Claim 4 or 5, characterized in that the displaceable part (54) is provided with the compensation weight (68).

7. Mobile unit according to one of Claims 1 to 6, characterized in that a wheel (14) is provided on each of the two mutually remote end portions of the wheel axle (12), each of the two wheels (14) being assigned a differential (20) and a regulator (56), and a central differential (72), which is operatively connected to the compensation weight (68), is provided on the wheel axle (12).

8. Mobile unit according to Claim 7, characterized in that a central input wheel (76), which meshes with a central output wheel (78), is fixed on the differential case of the central differential (72), and in that the compensation weight (68), which can be moved along a linear guide device (70), has a rack (80) that meshes with the central output wheel (78).

9. Mobile unit according to Claim 1, characterized in that the pinion (36) fixed on the wheel axle (12) is operatively connected to a pendulum weight (82) forming the compensation weight (68).

## Revendications

1. Appareil mobile du type comprenant au moins une roue (14) pouvant tourner autour d'un essieu (12), un corps lesté (16) monté angulaire sur l'essieu (12) et dont le centre de gravité se trouve au-dessous de l'essieu (12), un contrepoids (68) compensant les mouvements de basculement du corps lesté (16) autour de l'essieu (12) et pouvant être, par l'intermédiaire d'un régulateur (56), déplacé hors de la position normale de repos dans laquelle le centre de gravité de l'appareil (10) se trouve à la verticale au-dessous de l'essieu (12) et une installation d'entraînement (18) prévue sur le corps lesté (16) en vue de l'entraînement d'au moins une roue (14) de l'appareil (10), caractérisé en ce que l'essieu (12) de la roue (14) porte un différentiel (20) qui est relié positivement à l'installation d'entraînement (18) et qui est disposé entre la roue (14) et un pignon associé (36), lequel est relié positivement au régulateur associé (56) et au contrepoids associé (68) ou au contrepoids (68) constitué par chaque régulateur respectif (56).

2. Appareil mobile selon la revendication 1, caractérisé en ce que chaque différentiel respectif (20) est relié positivement à l'installation d'entraînement (18) par l'intermédiaire d'un arbre d'entraînement, d'une roue d'entraînement (48) fixée sur l'arbre d'entraînement et d'une roue entraînée (44) fixée au carter de différentiel (26) et engrenant avec la roue d'entraînement (48).

3. Appareil mobile selon la revendication 2, caractérisé en ce que, à la roue entraînée (44) est relié un disque de frein (46).

4. Appareil mobile selon la revendication 1, caractérisé en ce que le régulateur (56) comporte une portion lestée (58) fixe par rapport au corps lesté (16) et une portion coulissante (54) prévue mobile linéairement par rapport à la portion lestée et présentant une crémaillère (52) engrenant avec le pignon (36), un dispositif élastique (62) étant prévu entre la portion lestée (58) et la portion coulissante (54).

5. Appareil mobile selon la revendication 4, caractérisé en ce que le dispositif élastique (62) présente deux éléments élastiques semblables (64), dont l'un est soumis à une traction et l'autre est soumis à une pression lors d'un déplacement de la portion coulissante (54), et inversement.

6. Appareil mobile selon l'une des revendications 4 ou 5, caractérisé en ce que la portion coulissante (54) est prévue avec le contrepoids (68).

7. Appareil mobile selon l'une des revendications 1 à 6, caractérisé en ce que, à chacune des deux sections terminales respectives éloignées l'une de l'autre de l'essieu (12) est prévue une roue (14), à chacune des deux roues (14) étant adapté un différentiel (20) et un régulateur (56) et à l'essieu (12) étant prévu un différentiel (72) qui est relié positivement au contrepoids (68).

8. Appareil mobile selon la revendication 7, caractérisé en ce que, au carter du différentiel central (72) est fixée une roue d'entraînement central (76), qui engrène avec une roue entraînée centrale (78) et en ce que le contrepoids (68) déplaçable le long d'une installation de guidage linéaire (70) présente une crémaillère (80) qui engrène avec la roue entraînée centrale (78).

9. Appareil mobile selon la revendication 1, caractérisé en ce que le pignon (36) fixé à l'essieu (12) est relié positivement à un poids pendulaire (82) constituant le contrepoids (68).
